(19) Europäisches Patentamt
European Patent Office
Office européen des brevets

(11) Veröffentlichungsnummer: **0 244 603**
**A2**

(12) # EUROPÄISCHE PATENTANMELDUNG

(21) Anmeldenummer: 87103893.1

(22) Anmeldetag: 17.03.87

(51) Int. Cl.⁴: C08F 8/30

(30) Priorität: 05.04.86 DE 3611421

(43) Veröffentlichungstag der Anmeldung: 11.11.87 Patentblatt 87/46

(84) Benannte Vertragsstaaten: BE DE FR GB IT NL

(71) Anmelder: BASF Aktiengesellschaft
Carl-Bosch-Strasse 38
D-6700 Ludwigshafen(DE)

(72) Erfinder: Bronstert, Klaus, Dr.
Gartenstrasse 26
D-6719 Carlsberg(DE)
Erfinder: Wagner, Daniel, Dr.
Schlossgasse 43
D-6706 Wachenheim(DE)

(54) **Polymerisate mit Aminogruppen, deren Herstellung und Verwendung.**

(57) Die Erfindung betrifft mit Aminogruppen funktionell modifizierte Homo-, Co-und/oder Blockcopolymerisate aus Vinylaromaten und/oder Dienen, welche funktionelle Gruppen der Formel (I) bis (VI) enthalten

EP 0 244 603 A2

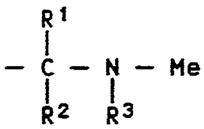 (I)

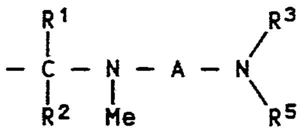 (II)

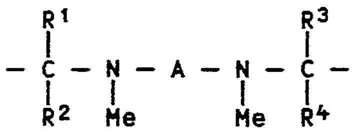 (III)

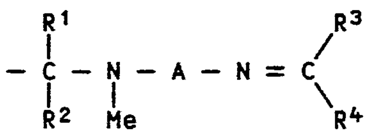 (IV)

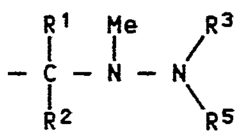 (V)

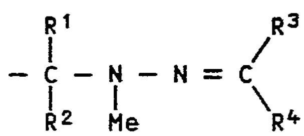 (VI)

worin N = Stickstoff, $R^1$ und $R^4$ = ein Wasserstoff-, Alkyl-, Cycloalkyl-oder Arylrest, $R^2$, $R^3$ und $R^5$ = ein Alkyl-, Cycloalkyl-oder Arylrest, Me = ein Alkalimetall und worin A eine ggf. substituierte Brücke ist, die außer Kohlenstoff zusätzlich N-oder O-Glieder enthalten kann, ein Verfahren zur Herstellung der Polymerisate aus lebenden anionisch polymerisierten oder aus mit Alkalimetall metallierten Homo-, Co-und/oder Blockcopolymerisaten aus Vinylaromaten und/oder Dienen, die mit entsprechenden Stickstoffverbindungen, in Gegenwart eines gegebenenfalls unpolaren Lösungsmittels, umgesetzt werden, und die Abwandlung der Polymerisate nach Anspruch 1 zur Herstellung analoger Polymerisate durch Hydrolyse, Alkoholyse und/oder durch Hydrierung.

## Polymerisate mit Aminogruppen, deren Herstellung und Verwendung

Die Erfindung betrifft mit Aminogruppen funktionell modifizierte Homo-, Co-und/oder Blockcopolymerisate aus Vinylaromaten und/oder Dienen, deren Herstellung aus lebenden anionisch polymerisierten oder aus mit Alkalimetall metallisierten Homo-, Co-und/oder Blockcopolymerisaten aus Vinylaromaten und/oder Dienen und deren Verwendung zur Herstellung analoger Polymerisate durch Hydrolyse oder Alkoholyse.

Bei derartigen Polymerisaten handelt es sich um Verbindungen mit Molekulargewichten aus dem Gewichtsmittel $\bar{M}_w$ zwischen 400 und 500.000, bevorzugt zwischen 2.000 und 400.000, die funktionelle Gruppen und/oder Endgruppen an den Polymerisatmolekülen statistisch verteilt und/oder an den Kettenenden enthalten.

Funktionell modifizierte Polymerisate aus Vinylaromaten und/oder Dienen und deren Herstellung aus den entsprechenden lebenden, anionisch polymerisierten oder aus den mit Alkalimetall metallisierten Polymerisaten sind bereits seit längerer Zeit bekannt. Danach gibt es eine Vielzahl elektrophiler Substanzen, die lebende Polymerketten nicht nur abbrechen, sondern eine funktionelle Gruppe in das Polymerisat einführen. So können z.B. Polymerisate mit Hydroxyl-, Carboxyl-, Thiol-oder Halogengruppen durch Umsatz lebender Polymere mit Verbindungen wie Epoxiden, Aldehyden, Ketonen, Kohlendioxid, Anhydriden, cyclischen Sulfiden, Disulfiden oder Halogenen dargestellt werden. Mit primären oder sekundären Aminogruppen substituierte Polymere lassen sich dagegen nicht durch Umsetzen mit primären oder sekundären Aminen darstellen, da diese durch Protonentransfer zum einfachen Abbruch lebender Polymere führen.

Lediglich tertiäre Aminogruppen lassen sich durch Umsetzen mit N,N-disubstituierten Aminoaldehyden oder -ketonen wie z.B. p-N,N-Dimethylaminobenzaldehyd einführen (vgl. US-Patent 3,109,871).

Die Herstellung von Polydienen mit primären Aminogruppen unter Verwendung von Katalysatoren mit geschützter Aminofunktion, wie z.B. p-Lithium-N,N-bis(trimethylsilyl)anilin wird von D.N. Schulz und A.F. Halasa in der Zeitschrift J. Polym. Sci., Polym. Chem. Ed. 15 (1977), Seiten 2401 bis 2410 beschrieben. Die beschränkte Anwendbarkeit dieses Verfahrens ist im wesentlichen in der schlechten Löslichkeit der modifizierten Initiatoren in unpolaren Kohlenwassertofflösungsmitteln begründet. Die unumgängliche Verwendung polarer Lösungsmittel wie Diethylether im zitierten Beispiel wirkt sich jedoch bekanntlich nachteilig auf Mikrostruktur der Dienpolymerisate aus.

Von R. Koenig et al. wird in der Zeitschrift Europ. Polym. J. 3, (1967), Seiten 723 bis 731 berichtet, daß die Desaktivierung von anionisch, lebendem Polystyrol durch Benzylidenanilin zu Polymeren mit sekundären aromatischen Aminendgruppen führt. Die Autoren kommen darin zu dem Ergebnis, daß die Reaktionsfähigkeit der Kohlenstoff-Stickstoff-Doppelbindungen gegenüber Polystyrylcarbanionen eine quantitative Umsetzung nur in einem polaren Lösungsmittel erlaubt.

Die Synthese von Polymeren mit primären Aminogruppen durch Reaktion von anionisch lebenden Polymeren mit geschützten Aminierungsreagenzien wie N-Trimethylsilylbenzylidenamin ist von A. Hirao et al. in der Zeitschrift Makromol. Chem. Rapid Commun. 3, (1982), Seiten 59 bis 63 beschrieben.

Nachteilig bei diesen bekannten Verfahren zur Einführung von Amingruppen in Polymerisate ist, daß diese häufig nur unter Verwendung eines vielfachen Überschusses an Aminierungsreagenz mit genügend hoher Ausbeute verlaufen, so daß die mit Amin modifizierten Polymere durch inerte Nebenprodukte verunreinigt sind.

Ferner muß nach der Umsetzung in einer zusätzlichen Reaktion der Trimethylsilylrest aus den Umsetzungsprodukten abgespalten werden. Die Entfernung des entstehenden Nebenproduktes. Trimethylsilanol ist schwierig.

In der europäischen Patentanmeldung Nr. 86110539 ist schließlich die Herstellung von Polymeren mit Aminendgruppen vorgeschlagen worden durch Umsetzung lebender Lithiummetalle enthaltender Polymerer mit Diaziridinen. Hier werden sehr spezifische Reagenzien benötigt.

Aufgabe der Erfindung war es daher, in einer eindeutigen und mit hohem Umsatz verlaufenden Reaktion Polymere aus Vinylaromaten und/oder Dienen mit mindestens einer aminischen Gruppe und/oder Endgruppe zu schaffen. Es bestand weiterhin die Aufgabe, die Umsetzung gegebenenfalls in unpolaren Lösungsmitteln, insbesondere in einem aliphatischen, cycloaliphatischen und/oder aromatischen Kohlenwasserstoff und unter Verwendung von stöchiometrischen oder geringfügigem Überschuß eines leicht zugänglichen Aminierungsreagenzes. durchzuführen. Es bestand ferner die Aufgabe Polymerisate mit Aminogruppen auf einfachem Wege zu erhalten.

Es wurde nun gefunden, daß dieses Ziel erreicht werden kann mit Polymeren nach Ansprüchen 1 bis 7, einem Verfahren zur Herstellung von derartigen Polymeren nach Anspruch 8 und Verwendung der Polymeren gemäß Ansprüchen 9 und 10.

Nach erfindungsgemäßen Verfahren werden metallorganische Gruppen enthaltende Polymere mit Verbindungen umgesetzt, die mindestens eine -C=N-Doppelbindung enthalten, wobei der Stickstoff kein Proton oder Sauerstoffrest enthalten darf.

Geeignete Verbindungen sind z.B. Schiffsche Basen, Hydrazone von asymetrisch disubstituierten Alkyl-und/oder Arylhydrazinen oder Azine.

Zur Einführung von Amingruppen in anionisch polymerisierbare, lebende Polymere sind insbesondere geeignet Aldimine aus linearen oder verzweigten aliphatischen Aldehyden und linearen oder verzweigten aliphatischen, cycloaliphatischen oder aromatischen primären Aminen wie z.B. Butylidenbutylamin, Butylidenisopropylamin, Isobutylidenpropylamin, Isobutylidentert.-butylamin, Isobutylidencyclohexylamin, Isobutylidenanilin usw.

Aldimine aus cycloaliphatischen, heterocyclischen ggf. weiter substituierten und/oder aromatischen Aldehyden und linearen oder verzweigten aliphatischen, cycloaliphatischen, heterocyclischen und/oder aromatischen Aminen wie z.B. Cyclohexylidenisopropylamin, Benzyliden-n-propylamin, Benzylidencyclohexylamin, Benzylidenanilin, Benzyliden-m-trifluormethylanilin, Furfurylidenanilin, Benzyliden-N,N-dimethylaminoethylendiamin, Cyclohexyliden-N,N-diethylaminohexamethylendiamin usw.

Ebenfalls kann die Umsetzung metallorganischer Gruppen enthaltender Polymere mit den bi-und/oder polyfunktionellen Schiffschen Basen erfolgen, wie zum Beispiel mit Diisopropylidenethylendiamin, Dibenzylidenethylendiamin, Diisobuylidenhexamethylendiamin, Dibenzylidenpropylendiamin usw. Diese Verbindungen eignen sich darüber hinaus als Kopplungsmittel.

Die bi-oder polyfunktionellen Schiffschen Basen können aus unterschiedlichen Aldehyden und/oder Ketonen dargestellt und umgesetzt werden. Als Beispiele seien genannt N-Isobutyliden-N'-benzylidenethylendiamin oder N-Acetonyl-N'-benzylidenhexamethylendiamin.

Ferner sind zur Einführung von Amingruppen in anionisch polymerisierbare, lebende Polymere symetrische oder asymetrische Aldazine bzw. Ketazine geeignet, wie z.B. Acetaldazin, Butyraldazin, Benzaldazin, Acetonazin, Phenylacetaldehydbutanon-azin, Pyridin-2-aldazin, Benzophenonazin.

Als Funktionalisierungsreagenzien können ebenfalls die Kondensationsprodukte aus asymetrisch disubstituierten Alkyl-und/oder Arylhydrazinen und Aldehyden oder Ketonen eingesetzt werden, wie z.B. Isobutyraldehyd-N,N-dimethylhydrazon, Benzaldehyd-N,N-dimethylhydrazon, Isobutyraldehyddiphenylhydrazon usw.

Mit geringeren Ausbeuten lassen sich anionisch polymerisierte lebende Polymerisate auch mit den Kondensationsprodukten aus linearen oder verzweigten aliphatischen, cycloaliphatischen oder aromatischen Ketonen wie z.B. Aceton, Ethylmethylketon, 3-Pentanon, Cyclohexanon, Acetophenon oder Benzophenon und primären Aminen, den Ketiminen, umsetzen.

Diese Aufzählung ist nicht vollständig und soll keine Abgrenzung sein.

Geeignete Verfahren zur Herstellung von Verbindungen vom Typ der Aldimine, Ketimine, Diimine, Hydrazone und Azine sind bekannt und werden z.B. in "Methoden der organischen Chemie" (Houben-Weyl), Band XI/2 (4. Auflage) (1958), Seiten 77ff; BAnd X/2, 4. Auflage (1967), Seiten 89ff; Band VII/1, 4. Auflage (1954), Seiten 455ff und 461ff eingehend beschrieben und referiert.

Erfindungsgemäß sind unter Homo-, Co-und Blockcopolymerisaten aus Vinylaromaten und/oder Dienen die bekannten Polymerisate dieser Art zu verstehen, die anionisch z.B. mit Hilfe von alkalimetallorganischen Initiatoren aus den entsprechenden Monomeren erhalten werden können. Derartige Verfahren sind hinlänglich bekannt, so daß sie hier nicht weiter erörtert werden müssen (vgl. z.B. GB-Patent 1 444 680 oder J.Appl.Polym.Sci. 22, [1978], Seiten 2007 bis 2013).

Als Vinylaromaten kommen insbesondere Styrol, die verschiedenen Alkylstyrole oder Vinylnaphthalin, als Diene Butadien, Isopren, 2,3-Dimethylbutadien, Piperylen, Phenylbutadien oder andere anionisch polymerisierbare konjugierte $C_4$-bis $C_{12}$-Diene in Betracht. Außer den jeweiligen Homopolymerisaten können auch die Copolymerisate und die bekannten Blockcopolymerisate von Vinylaromaten und Dienen in Frage, wobei je nach Wahl des Initiators und Verfahrensweise Blockcopolymerisate oder Copolymerisate mit statistischer Verteilung der Monomeren erhalten werden können.

Die erfindungsgemäßen Polymerisate mit den funktionellen Gruppen (I-VI) werden entweder aus den lebenden anionisch polymerisierten oder aus mit Alkalimetall metallierten Homo-, Co-und/oder Blockcopolymerisaten aus Vinylaromaten und/oder Dienen nach bekannten Verfahren hergestellt.

Dazu werden die Monomeren in Gegenwart von Alkalimetallen oder deren Alkyl-oder Arylderivaten, insbesondere in Gegenwart der Alkylderivate des Lithiums wie sec.-Butyllithium in einem inerten Lösungsmittel wie aliphatischen, cycloaliphatischen oder aromatischen Kohlenwasserstoffen, insbesondere Hexan, Cyclohexan, Benzol oder Toluol bzw. in Gegenwart von Tetrahydrofuran anionisch polymerisiert.

Als Polymerisationsinitiatoren sind ebenfalls multifunktionelle alkalimetallhaltige Verbindungen geeignet, wie sie z.B. in der EP-A-1977 oder von F. Bandermann et al. in der Zeitschrift Makromol. Chemie. 186, (1985). Seiten 2017 bis 2024 beschrieben sind.

Bei diesen Verfahren erhält man Polymerisate, welche an den Endgruppen Metall gebunden enthalten. Man kann aber auch Homo-, Co-und/oder Blockcopolymerisate aus Vinylaromaten und/oder Dienen herstellen und nachträglich mit Alkalimetallen oder deren Derivaten metallieren. Derartige metallierte Polymerisate enthalten die metallorganischen Gruppierungen statistisch längs der Kette verteilt.

Verfahren zur Metallierung ungesättigter Polymerisate und Umsetzen des erhaltenen metallierten Polymerisats mit reaktionsfähigen chemischen Verbindungen sind auch in den US-Patenten 3 781 260 und 3 976 628 beschrieben.

Erfindungsgemäß werden die obigen metallorganischen Polymeren mit Stickstoffverbindungen der allgemeinen Formeln (VII bis XI) in Gegenwart eines Lösungsmittels umgesetzt. Als Lösungsmittel bevorzugt geeignet sind aliphatische, cycloaliphatische oder aromatische Kohlenwasserstoffe wie Hexan, Cyclohexan, Benzol, Toluol usw. Die Umsetzung erfolgt in Abwesenheit von Wasser und in inerter Atmosphäre z.B. unter Reinstickstoff. Die Umsetzung erfolgt zwischen -70°C und 100°C, vorzugsweise bei Temperaturen zwischen 0°C und 60°C.

Insbesondere die Umsetzung mit den Aldiminen verläuft mit großer Geschwindigkeit und mit hoher Ausbeute. So können lebende Polymerlösungen mit styrylcarbanionischen Endgruppen, die eine intensive Orangerotfärbung aufweisen, mit äquimolaren Mengen auf das Verschwinden der Farbe austitriert werden.

Es ist ein Vorteil, daß man bei ihrer Anwendung als Aminierungsreagenz häufig keinen oder nur wenig Überschuß benötigt, so daß die umgesetzten Polymeren kaum durch nicht umgesetzte Stickstoffverbindungen verunreinigt sind.

Die Umsetzung mit den bifunktionellen Schiffschen Basen führt je nach dem molaren Verhältnis Abbruchreagenz/lebenden Kettenende bzw. metallierten Gruppe zu fast vollständig gekoppelten, teilweise gekoppelten sowie fast vollständig nicht gekoppelten Polymerisaten.

Die erfindungsgemäßen Polymerisate mit den funktionellen Gruppen (I bis III, V) können zur Herstellung analoger Polymerisate mit den funktionellen Gruppen (XII, XIII, XIV, XVI) verwendet werden, wenn sie mit einer dem Alkalimetall äquivalenten Menge Wasser oder Alkohol umgesetzt werden, wobei das Alkalimetall durch Wasserstoff ausgetauscht wird. Diese Umsetzung erfolgt spontan bei Zugabe des Wassers oder Alkohols, wobei sich außerdem Lithiumhydroxid oder -alkoholat bildet.

Die erfindungsgemäßen Polymerisate mit den funktionellen Gruppen (IV) und (VI) können bei der Hydrolyse ggf. unter Säurekatalyse und Abspaltung einer Aldehyd-bzw. Ketogruppe in Polymerisate mit den funktionellen Gruppen der allgemeinen Formeln (XV und XVII) umgewandelt werden.

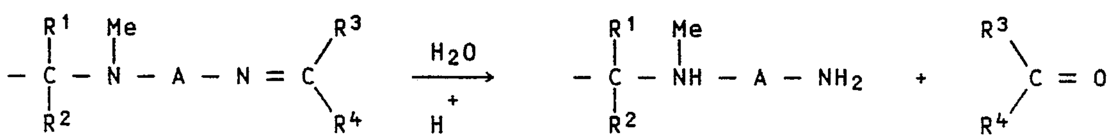


IV XV

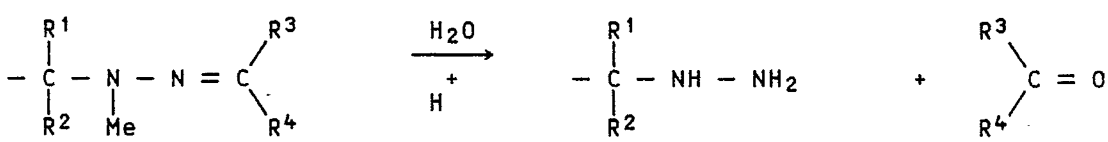


VI XVII

Man gelangt auf diese Weise zu Polymerisaten die eine primäre und eine sekundäre Aminogruppe tragen.

Die erfindungsgemäßen Polymerisate mit den funktionellen Gruppen (XII-XVII) können ferner durch Hydrierbehandlung in Polymerisate überführt werden, in denen die aliphatischen ungesättigten Bindungen teilweise oder vollständig abgesättigt sind.

Die Hydrierung wird vorzugsweise mit molekularem Wasserstoff und Katalysatoren auf Basis von Metallen oder Metallsalzen der 8. Gruppe des Periodensystems durchgeführt. Sie kann in heterogener Phase z.B. mit Raney-Nickel oder in homogener Phase mit Katalysatoren auf Basis von Salzen, insbesondere den Carboxylaten, Alkoxyden oder Enolaten des Kobalts, Nickels oder Eisens, die mit Metallalkylen, insbesondere Aluminiumalkylen kombiniert sind, erfolgen.

Die folgenden Beispiele dienen der Erläuterung der Erfindung.

Die für die Beispiele benutzten Verbindungen wurden durch Kondensation äquimolarer Mengen primärer Amine bzw. asymetrisch substituierter Hydrazine. bzw. halbäquimolarer Mengen aliphatischer Diamine und Hydrazin mit den entsprechenden Aldehyden bzw. Ketonen nach den bekannten Standardverfahren (s. zit. Literatur) hergestellt. Das gebildete Wasser wurde in einigen Fällen zur Vervollständigung der Reaktion als Azeotrop abdestilliert. Die Verbindungen wurden anschließend durch eine Destillation ggf. unter Vakuumbedingungen gereinigt und zeigen die folgenden Eigenschaften:

1.) Isobutylidenpropylamin ($C_7H_{15}N$) FG: 113
Kp 1000 mbar, 115°C

| Gehalt an (%) | C | H | N |
|---|---|---|---|
| Theorie | 74,33 | 13,27 | 12,38 |
| Analyse | 74,2 | 13,3 | 12,4 |

2.) Furfurylidenpropylamin ($C_8H_{11}NO$) FG: 137
Kp 4 mbar, 55°C

| Gehalt an (%) | C | H | N |
|---|---|---|---|
| Theorie | 70,04 | 8,08 | 10,21 |
| Analyse | 69,9 | 8,1 | 10,0 |

3.) Furfurylidenanilin ($C_{11}H_9NO$) FG: 171
Kp 1 mbar, 115-120°C

| Gehalt an (%) | C | H | N |
|---|---|---|---|
| Theorie | 77,17 | 5,37 | 8,18 |
| Analyse | 76,8 | 5,4 | 8,3 |

4.) Benzylidenanilin ($C_{13}H_{11}N$) FG: 181
Kp 2 mbar, 155°C Fp: 53°C

| Gehalt an (%) | C | H | N |
|---|---|---|---|
| Theorie | 86,15 | 6,12 | 7,73 |
| gef. | 86,1 | 6,2 | 7,8 |

5.) Benzylidenpropylamin ($C_{10}H_{13}N$) FG: 147
Kp 2 mbar, 74°C

| Gehalt an (%) | C | H | N |
|---|---|---|---|
| Theorie | 81,59 | 8,9 | 9,51 |
| gef. | 81,2 | 8,9 | 9,8 |

6.) Benzylidendimethylaminoethylendiamin ($C_{11}H_{16}N_2$) FG: 176
Kp 2 mbar: 100-105°C

| Gehalt an (%) | C | H | N |
|---|---|---|---|
| Theorie | 75,05 | 9,2 | 15,8 |
| gef. | 75,0 | 9,1 | 15,9 |

7.) Dibenzyliden-1,3-diaminopropan ($C_{17}H_{18}N_2$) FG: 250
Kp 1 mbar, 153°C

| Gehalt an (%) | C | H | N |
|---|---|---|---|
| Theorie | 81,56 | 7,25 | 11,19 |
| gef. | 81,5 | 6,8 | 11,3 |

8.) Diisobutyliden-1,6-diaminohexan ($C_{14}H_{28}N_2$) FG: 224,4
Kp 2 mbar: 106-110°C

| Gehalt an (%) | C | H | N |
|---|---|---|---|
| Theorie | 74,94 | 12,58 | 12,48 |
| gef. | 73,9 | 12,4 | 12,2 |

9.) Benzaldehyd-N,N-dimethylhydrazon ($C_9H_{12}N_2$) FG: 148
Kp 3 mbar: 94°C

| Gehalt an (%) | C | H | N |
|---|---|---|---|
| Theorie | 72,94 | 8,16 | 18,9 |
| gef. | 72,6 | 8,0 | 19,0 |

10.) Isobutyraldazin ($C_8H_{16}N_2$) FG: 140
Kp 1000 mbar: 153°C

| Gehalt an (%) | C | H | N |
|---|---|---|---|
| Theorie | 68,57 | 11,42 | 20 |
| gef. | 68,6 | 11,4 | 19,8 |

11.)Tris[isobutyliden(2-aminoethyl)amin] ($C_{18}H_{36}N_4$) FG: 308.3
Kp 2 mbar: 165°C

| Gehalt an (%) | C | H | N |
|---|---|---|---|
| Theorie | 70,08 | 11,76 | 18,16 |
| gef. | 69,9 | 11,6 | 18,1 |

Beispiel 1

In einem unter Reinstickstoff mit einer Lösung von n-Butyllithium in Cyclohexan gespülten, thermostatisierbaren 2-Liter-Reaktionsgefäß, der mit Rührer und Thermometer versehen ist, und mit einer Siliconmembran gasdicht verschlossen ist, werden 500 ml Cyclohexan und 52 g (1/2 Mol) Styrol gegeben. Bei 40°C wird mit einer Injektionsspritze unter gutem Rühren so lange eine 1,4 molare Lösung von sec.-Butyllithium in Cyclohexan zu der Styrollösung gegeben, bis eine bleibende schwache Gelbfärbung entsteht. Daraufhin werden weitere 10 mMol sec.-Butyllithium zugegeben Die jetzt intensiv orange gefärbte Lösung erwärmt sich. Nach einer Stunde ist die Polymerisation beendet. Mittels einer Injektionsspritze wird die Lösung mit Benzylidenpropylamin austitriert. Nach Zugabe von 1,5 g Aminierungsreagenz (~0,01 Mol) ist die orange Farbe verschwunden. Man hält die Lösung für weitere 15 min bei 40°C. Das Polymer wird unter intensivem Rühren durch Eingießen der Lösung in 5 l Ethanol gefällt. Nach Abfiltrieren und Trocknen bei 60°C im Vakuum werden an dem weißen pulvrigen Polystyrol die folgenden analytischen Daten festgestellt:

Molekulargewicht aus dem Gewichtsmittel $\overline{M}_w$: 5000 ermittelt durch GPC, die mit eng verteilten Standardpolystyrolen geeicht wurde.

Basenstickstoff bestimmt durch potentiometrische Titration mit Perchlorsäure in einer Mischung von Chlorbenzol/Eisessig: 0,26 Gew.% Gesamtstickstoff bestimmt nach Kjeldahl: 0,25 Gew.% (Theorie: 0,28 % N).

Beispiele 2 bis 8

In gleicher Weise wie in Beispiel 1 beschrieben, werden lebende Polystyrole hergestellt und mit den voran beschriebenen Stickstoffverbindungen umgesetzt.

Tabelle 1 gibt Auskunft über die Art und Menge der eingesetzten Funktionalisierungsreagenzien und die an den gefällten und getrockneten Polymeren ermittelten Analysedaten.

Aus der Übersicht geht hervor, daß die Aldimine bei der Einführung von Amingruppen in lebende Polymerisate besonders hohe Ausbeuten ergeben. Die Umsetzung mit den bifunktionellen Schiffschen Basen (Bsp. 4 und 5) führt je nach dem molaren Verhältnis Abbruchreagenz/lebendem Kettenende zu fast vollständig gekoppelten, teilweise gekoppelten und, bei Anwendung eines (zweifachen) Überschusses fast vollständig nicht gekoppelten Polymerisaten.

Die Umsetzung lebender Kettenenden mit Aldazinen (Bsp. 8) führt unter den gewählten Bedingungen zu noch befriedigenden Funktionalisierungsausbeuten.

Die Umsetzung mit substituierten Hydrazonen und Ketiminen führt unter den gewählten Bedingungen nur zu mäßigen Ausbeuten.

Tabelle 1

| Beispiel | Aminierungsreagenz (A) | (A)/Li a) [mol. Verh.] | $\overline{M}_w$ b) [GPC] | $\overline{M}_w$ c) [GPC] | VZ d) [$cm^3g^{-1}$] | BAS.-N g) [Gew.%] | GES.-N h) [Gew.%] | N-Gehalt [Theorie] | % d.Th. [Ausbeute] |
|---|---|---|---|---|---|---|---|---|---|
| 2 | Benzyliden-dimethylamino-ethylendiamin | 1,2 | 4500 | 4500 | 6,6 | 0,54 | 0,54 | 0,62 e) | ~87 |
| 3 | Butyliden-n-propylamin | 1,2 | 5000 | 5000 | 7,1 | 0,26 | 0,25 | 0,28 f) | ~92 |
| 4 | Dibenzyliden-1,3-diamino-propan | 0,5 | 5000 | 10000 | 9,6 | 0,26 | 0,25 | 0,28 e) | ~92 |
| 5 | Diisobutyliden-1,6-diamino-hexan | 2 | 5000 | 5000 | 6,8 | 0,47 | 0,47 | 0,56 e) | ~84 |
| 6 | Diethylidenanilin | 1,2 | 5500 | 5500 | 8,1 | 0,09 | 0,082 | 0,25 f) | ~34 |
| 7 | Benzaldehyd-N,N-dimethyl-hydrazon | 1,2 | 5000 | 5000 | 7,1 | 0,21 | 0,23 | 0,56 e) | ~40 |
| 8 | i-Butyraldazin | 1,2 | 4500 | 4500 | 6,6 | 0,38 | 0,39 | 0,62 e) | ~63 |

a) molares Verhältnis: Aminierungsreagenz/Initiator
b) mittlere Molmasse: ... vor der Umsetzung
c) mittlere Molmasse: ... nach der Umsetzung
d) Viskositätszahl gemessen in Toluol bei $25^0C$ (Polymerkonzentr. 0,5 $gdl^{-1}$) nach der Umsetzung
e) berechnet für 2 N-Atome je Molekül
f) berechnet für 1 N-Atome je Molekül
g) Basenstickstoff, bestimmt durch potentiometrische Titration
h) Gesamtstickstoff, bestimmt nach Kjeldahl

Beispiel 9

Ein mit Rührer, Thermometer, Rückflußkühler, Siliconmembran und Heizmantel ausgerüsteter 6-l-Reaktor wird mit einer Lösung von 3 $cm^3$ sec.-Butyllithium in Cyclohexan unter Reinstickstoff zur Reinigung ausgekocht.

Nach Ablassen der Lösung wird der Reaktor mit 3000 $cm^3$ Cyclohexan und 850 g Isopren (gereinigt über Ca-hydrid) beschickt. Mit 25 mMol sec.-Butyllithium wird in einem Temperaturbereich zwischen 65°C und 75°C unter Bildung eines lebenden Polyisoprens polymerisiert. Nach Beendigung der Polymerisation werden 2 $cm^3$ Styrol zugegeben. Nach einer weiteren Stunde wird mit 3,5 g ≙ 30 mMol Isobuyliden-n-propylamin auf farblos titriert.

Nach GPC (Gelpermeationschromatographie) wird ein $\overline{M}_w$ von 36.000 ermittelt. Der Stickstoffgehalt nach Kjeldahl beträgt 0,035 Gew.% (Theorie: 0,038 Gew.%).

Beispiel 10

In der Apparatur gemäß Beispiel 2 wird zur Herstellung eines 2-Blockcopolymeren aus 17 Gew.% Styrol und 83 Gew.% Butadien zunächst 0,9 Mol = 93,6 g Styrol in 3000 $cm^3$ Cyclohexan vorgelegt. Mit Hilfe einer Injektionsspritze wird bei 40°C so lange eine Lösung von sec.-Butyllithium zudosiert, bis eine leichte Gelbfärbung anzeigt, daß alle Verunreinigungen verbraucht sind. Darauf werden 12 mMol sec.-Butyllithium zugegeben und eine Stunde bei 65°C das Styrol auspolymerisiert. Sodann läßt man 10,2 Mol Butadien, das durch Abdestillieren von Butyllithium gereinigt wurde, nach und nach bei dieser Temperatur zulaufen. Eine Stunde nach Beendigung des Zulaufs setzt man noch 2 $cm^3$ Styrol zu. Die während der Polymerisation des Butadiens fast farblose Lösung färbt sich nach einer weiteren Stunde bei 65°C orange. Jetzt wird mit einer Injektionsspritze mit 2,2 g (12,5 mMol) Benzylidendimethylaminoethylendiamin auf farblos titriert. Das gefällte und getrocknete Polymerisat zeigt die folgenden analytischen Daten.

Nach GPC-Methoden wird ein $\overline{M}_w$ von 55.000 ermittelt. Gesamtstickstoff nach Kjeldahl 0,047 Gew.%.

Basenstickstoff durch potentiometrische Titration 0,046 Gew.% (Theorie: 0,05 Gew.%).

Beispiel 11

Zur Darstellung eines telechelen Polymerisats mit zwei Aminendgruppen wurde zunächst ein difunktioneller lithiumorganischer Initiator hergestellt. Als ein in Kohlenwasserstoffen gut löslicher bifunktioneller Initiator ist gemäß US-Patent 4 172 100 das Additionsprodukt aus 1,3-Bis-(1-phenylethenyl)benzol und sec.-Butyllithium bekannt.

1,3-Bis-(1-phenylethenyl)benzol wurde gemäß zitiertem Patent Beispiel 1 hergestellt und ohne weitere Reinigung durch Umkristallisieren zur Herstellung der Initiatorlösung eingesetzt.

4,5 mMol 1,3-Bis-(1-phenylethenyl)benzol wurden in 200 ml gereinigtem Cyclohexan gelöst und unter Ausschluß von Feuchtigkeit und unter Reinstickstoff mit 10 mMol sec.-Butyllithium versetzt. Nach 2 Stunden bei 60°C hat sich der Inhalt des Reaktionsgefäßes dunkelrot verfärbt.

In der Apparatur gemäß Beispiel 2 wird zunächst in 3000 $cm^3$ Cyclohexan 500 g Butadien, das durch Abdestillieren von Butyllithium gereinigt wurde, eingeleitet. Sodann wird mit Hilfe einer Injektionsspritze die beschriebene Lösung von 1,3-phenylen-bis-(3-methyl-1-phenylpentyliden)-bis-(lithium) in Cyclohexan zugegeben und der Reaktorinhalt unter langsamer Temperaturerhöhung bis 60°C polymerisiert. Die Polymerisation ist nach ca. 180 min abgeschlossen. Zu der Reaktionslösung werden 1.5 g (≙ 0.011 mol) Benzyliden-n-propylamin gegeben.

Nach weiteren 20 min wird das Polymerisat in Ethanol ausgefällt, gewaschen und getrocknet.

Die Molmasse des Polymerisats wurde gelchromatographisch zu $\overline{M}_w$ = 56.000 bestimmt.

Gesamtstickstoffgehalt nach Kjeldahl: 0.046 Gew.%

Basenstickstoff durch potentiometrische Titration: 0.045 Gew.%

Theorie (0,05 Gew.%).

Aus den Analysendaten ergibt sich, daß ein an beiden Enden mit Amingruppen funktionalisiertes Polymerisat entstanden ist.

Beispiel 12

Zur Darstellung eines gekoppelten Polymerisats wird in einer Apparatur gemäß Beispiel 1 zunächst aus 52 g Styrol gelöst in 500 ml Cyclohexan mit sec.-Butyllithium unter Reinstickstoff bei 50°C ein wachstumsfähiges Polystyrol mit einem Zahlenmittel des Molekulargewichts von 10.000 hergestellt.

Nach beendeter Polymerisation wird dem Reaktionsgefäß mittels einer Injektionsspritze 10 ml Lösung für Analysenzwecke entnommen.

Die intensiv orange gefärbte Lösung wird sodann mit 1/3 Äquivalent/Li Tris[isobutyliden(2-aminoethyl)-amin] auf farblos titriert, und die Kopplungsreaktion für weitere 30 min fortgesetzt.

Das Polymer wird unter intensivem Rühren in 5 l Ethanol ausgefällt, abfiltriert und bei 60°C im Vakuum getrocknet.

An den Polymeren werden die folgenden analytischen Daten festgestellt:

1) Molekulargewicht des linearen Polystyrols (GPC) : 11.000
2) M (peak) des gekoppelten Polystyrols (GPC) : 28.000
3) Kopplungsausbeute : 75 %
4) Gesamtstickstoff nach Kjeldahl (gekoppeltes PS) : 0,23 Gew.%

Basenstickstoff durch pot.Titration (gekoppeltes PS): 0,18 Gew.%
(Theorie: 0,24 %)

Aus den Analysedaten ergibt sich, daß mit hoher Ausbeute ein mit Amingruppen funktionalisiertes, dreistrahliges Polymerisat entstanden ist.

**Ansprüche**

1. Mit Aminogruppen funktionell modifizierte Homo-, Co-und/oder Blockcopolymerisate aus Vinylaromaten und/oder Dienen, dadurch gekennzeichnet, daß sie funktionelle Gruppen der Formel (I) bis (VI) enthalten

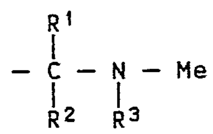

(I)

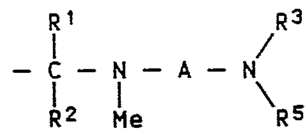

(II)

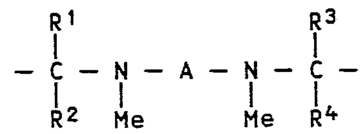

(III)

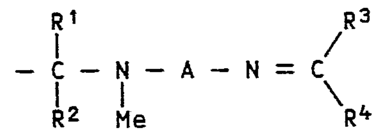

(IV)

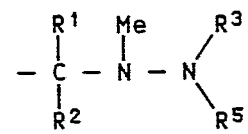

(V)

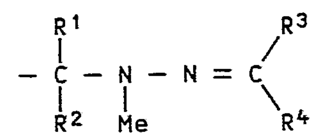

(VI)

worin N = Stickstoff, $R^1$ und $R^4$ = ein Wasserstoff-, Alkyl-, Cycloalkyl-oder Arylrest, $R^2$, $R^3$ und $R^5$ = ein Alkyl-, Cycloalkyl-oder Arylrest, Me = ein Alkalimetall und worin A eine ggf. substituierte Brücke ist, die außer Kohlenstoff zusätzlich N-oder O-Glieder enthalten kann.

2. Polymerisate nach Anspruch 1, dadurch gekennzeichnet, daß sie pro Makromolekül im Mittel 1 bis 10 der funktionellen Gruppen (I bis VI) enthalten.

3. Polymerisate nach Anspruch 1, dadurch gekennzeichnet, daß die Alkylreste $C_1$-bis $C_{12}$-Alkylreste, die Cycloalkylreste $C_5$-bis $C_8$-Cycloalkylreste und die Arylreste $C_6$-bis $C_{12}$-Arylreste sind.

4. Polymerisate nach Anspruch 1, dadurch gekennzeichnet , daß A eine gegebenenfalls substituierte Kohlenwasserstoffbrücke ist.

5. Polymerisate nach Anspruch 1, dadurch gekennzeichnet , daß die Brücke A eine gegebenenfalls substituierte Polymethylenbrücke mit 2 bis 12 $CH_2$-Gruppen, eine cycloaliphatische Brücke oder eine Phenylenbrücke ist.

6. Polymerisate nach Anspruch 1, dadurch gekennzeichnet, daß die Brücke A Methyl-, Ethyl-, Phenyl- oder Alkylidenaminogruppen als Substituenten trägt.

7. Polymerisate nach Anspruch 1, dadurch gekennzeichnet, daß sie funktionelle Gruppen der Formeln (I) oder (II) oder (III) oder (IV) oder (V) oder (VI) enthalten.

8. Verfahren zur Herstellung der Polymerisate nach Anspruch 1 aus lebenden anionisch polymerisierten oder aus mit Alkalimetall metallierten Homo-, Co-und/oder Blockcopolymerisaten aus Vinylaromaten und/oder Dienen, dadurch gekennzeichnet, daß diese Polymerisate mit Stickstoffverbindungen der allgemeinen Formeln (VII bis XI), in Gegenwart eines gegebenenfalls unpolaren Lösungsmittels, umgesetzt werden, wobei N, $R^1$ bis $R^5$ und A die oben angegebene Bedeutung haben.

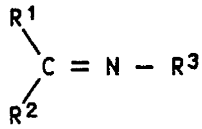

(VII)

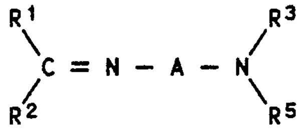

(VIII)

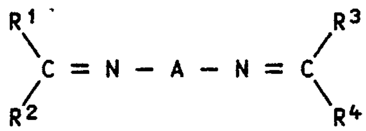

(IX)

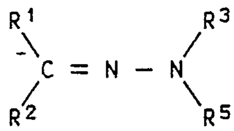

(X)

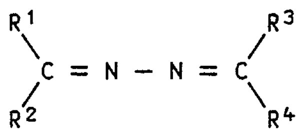

(XI)

9. Verwendung der Polymerisate nach Anspruch 1 zur Herstellung analoger Polymerisate mit den funktionellen Gruppen der allgemeinen Formeln (XII bis XVI) durch Hydrolyse oder Alkoholyse, wobei N, $R^1$ bis $R^5$ und A die oben angegebene Bedeutung haben

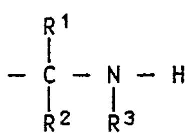 ; 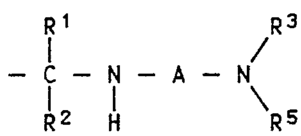 ; 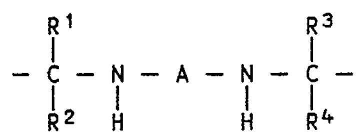 ;

(XII) (XIII) (XIV)

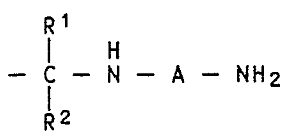 ; 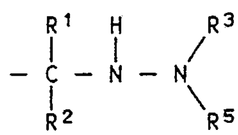 ; 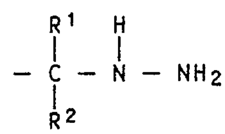

(XV) (XVI) (XVII)

10. Verwendung der funktionell modifizierten Polymerisate nach Anspruch 9 zur Herstellung von Polymerisaten, die durch Hydrierbehandlung unter teilweiser oder vollständiger Absättigung der aliphatischen ungesättigten Bindungen hergestellt werden.